# EUROPEAN PATENT APPLICATION

(11) **EP 4 481 980 A2**
(43) Date of publication of application: **25.12.2024**
(21) Application number: 24179974.1
(22) Date of filing: 04.06.2024
(51) Int. Cl.: H02J 3/38, H02J 3/24, H02J 3/48

(54) **METHOD AND ARRANGEMENT FOR INCREASING STABILITY IN AN ELECTRICITY GRID**

(30) Priority: 22.06.2023 FI 20235733
(71) Applicant: UPM Energy Oy, 00100 Helsinki (FI)
(72) Inventor: Haromo, Juha, 00100 Helsinki (FI)
(74) Representative: Papula Oy

(57) **Abstract**

For increasing stability in an electricity grid (110), a hydroelectric power generator (106) is run at a power level. The AC frequency of the grid (110) is monitored to detect a rate of change. As a response to a rate of change of said frequency, electric energy is made to flow between a rechargeable electric energy storage (201) and the grid (110) at a rate decided so that such electric energy counteracts the detected change of said AC frequency in a same direction as a mechanical inertia of said hydroelectric power generator (106) and at an absolute magnitude proportional to an absolute value of said detected rate of change of said AC frequency.

## Description

### FIELD OF THE INVENTION

The invention concerns generally the use of power sources to maintain a steady and sufficient supply of electric energy to an electricity grid. In particular the invention concerns the combined use of one or more rechargeable energy storages together with one or more hydroelectric power plants to stabilize the operation of the electricity grid.

### BACKGROUND OF THE INVENTION

A high-voltage grid is the geographically distributed backbone of electricity transmission. Power stations supply the grid with electric energy, and at the consuming end are industrial companies, distribution network companies, and ultimately individual households. Losses in the grid sum up with the actual loads to form the total demand of electric power. All users should receive a sufficient amount of electric power at all times, and the AC frequency of the grid should remain as stable as possible. Simultaneously the use of energy sources should be optimized. It is important to maintain a balance between supply and demand in the grid.

The AC frequency of the grid constitutes a relatively reliable indicator of the balance between supply and demand, so that excessive demand lowers the frequency and vice versa. The operator responsible for the grid may decide how various levels of frequency variation will trigger the use of power reserves. For example in a grid the nominal AC frequency of which is 50 Hz, normal operation reserves may be used to maintain the frequency error below 0.2%, i.e. between 49.9 and 50.1 Hz. If the frequency decreases below 49.9 Hz and all normal operation reserves are in use already, disturbance reserves are taken into use.

Conventionally, many types of power plants involved rotating synchronous machinery, in which the large, rotating mass acts as a natural stabilizer against frequency variations in the electricity grid. For example, in a hydroelectric power plant the water flow rotates a turbine, which in turn rotates the rotor of a generator. The rotation rate of the generator is constant and synchronized to the AC frequency of the electricity grid. If a suddenly increasing load in the grid begins to lower the AC frequency, the resulting braking torque must act against the angular momentum of the rotating mass, which may be tens of tons. Additional energy is released into the electricity grid through conversion of some mechanical energy, which slows down the frequency change and thus stabilizes the grid. Similarly, if the network frequency tends to rise, an accelerating torque must act against the angular momentum, converting some electric energy into mechanical energy and again stabilizing the grid against any sudden change.

Producing electric energy from other sources, such as wind and solar power for example, may not involve any similar inherent stabilizing effect. Their coupling to the grid may involve electronic inverters and frequency conversion technology operating under distributed, computerized control. While the use of renewable and pollution-free energy sources has its unquestionable advantages, the lack of inertia may lead to challenges in grid stabilization if the proportional amount of production with low inertia in the grid becomes large. Very unfavorable is for example a situation in which the controllers of a plurality of power-generating units begin to make mutually competing corrective changes, causing degrading stability in the form of the controlled variable - like grid AC frequency - oscillating back and forth.

### SUMMARY

It is an objective of the invention to present a method and arrangement for using hydroelectric power and rechargeable energy storage in a way that stabilizes the electricity grid against unfavorable changes. A particular objective of the invention is that the combination of hydroelectric power and rechargeable storage could be made to respond to detected changes in the electricity grid in a timely and accurate manner. A further objective of the invention is that the method and arrangement of the kind described above can be scaled to the needs of electricity grids of different size and composition.

The objectives of the invention are achieved by using a detected and/or predicted rate of change as a decision criterion when employing corrective measures.

A method according to the invention is characterized by the features recited in the characterizing part of the independent claim directed to a method.

An arrangement according to the invention is characterized by the features recited in the characterizing part of the independent claim directed to an arrangement.

A computer program according to the invention comprises one or more sets of one or more machine-executable instructions that, when executed by one or more processors, are configured to cause the performing of a method of the kind described above. The computer program may be embodied on a volatile or a non-volatile computer-readable record medium, for example as a computer program product comprising at least one computer readable non-transitory medium having program code stored thereon.

Advantageous embodiments are presented in the depending claims.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a plurality of hydroelectric power generators in power plants along a river,
**Figure 2** illustrates an arrangement according to an embodiment,
**Figure 3** illustrates a method according to an embodiment,
**Figure 4** illustrates an example of frequency measurements and energy flows,
**Figure 5** illustrates an example of frequency measurements and energy flows, and
**Figure 6** illustrates a method according to an embodiment.

### DETAILED DESCRIPTION

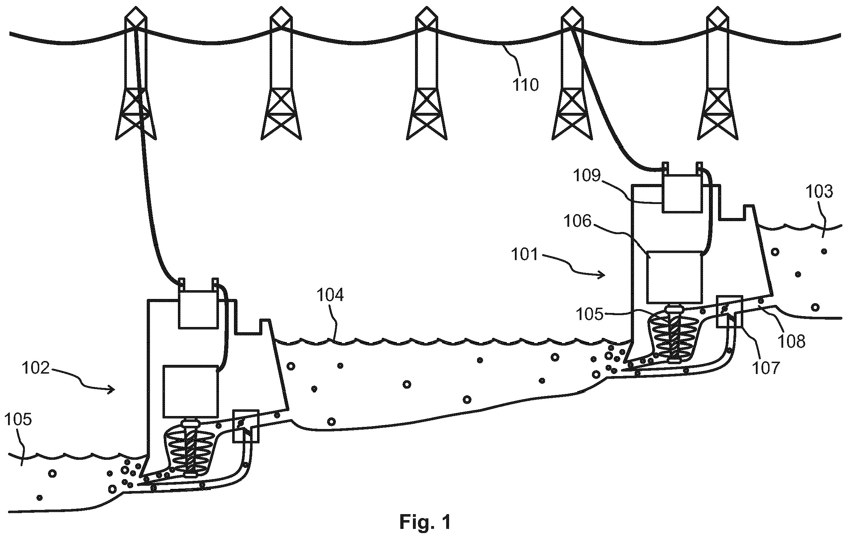

Fig. 1 illustrates schematically a first hydroelectric power plant 101 and a second hydroelectric power plant 102 that are located within a common drainage basin. Consequently, their hydroelectric power generators draw their operating powers from water flows of the common drainage basin. Fig. 1 illustrates a simplified case in which the first 101 and second 102 hydroelectric power plants are located in succession along a single river with no tributaries, so that the upper waters 103, middle waters 104, and lower waters 105 are actually the same water flowing through the system. In a real-life drainage basin the water circulation is much more complicated, including tributaries; rainfall; evaporation; agricultural, industrial and municipal use; and other factors, but this simplified model is sufficient for the following explanation of some basic concepts.

A hydroelectric power generator comprises a turbine 105, an associated generator 106, and an arrangement of controllable gates 107 and channels 108 that affect the flow of water through the turbine 105. A controllable coupling 109 couples the generator 106 to an electricity grid 110. One hydroelectric power plant may comprise a plurality of individually controllable hydroelectric power generators. The way in which the hydroelectric power generators supply electric energy to the grid 110 is based on an agreement between the operator of the hydroelectric power plant and the operator of the electricity grid.

In many cases a plurality of hydroelectric power plants within a common drainage basin, like the first 101 and second 102 hydroelectric power plants in fig. 1, are run by a common operator. Typically, especially in large drainage basins, a single operator has control over only some of the water flows within the drainage basin: for example, the operator may run a couple of hydroelectric power plants along a main river or river branch of the drainage basin. However, in order to maintain generality, the concept of being located within a common drainage basin is used here to cover all cases where at least some of the same water flows between two or more hydroelectric power generators for which a common operator (or a group of cooperating operators) is responsible.

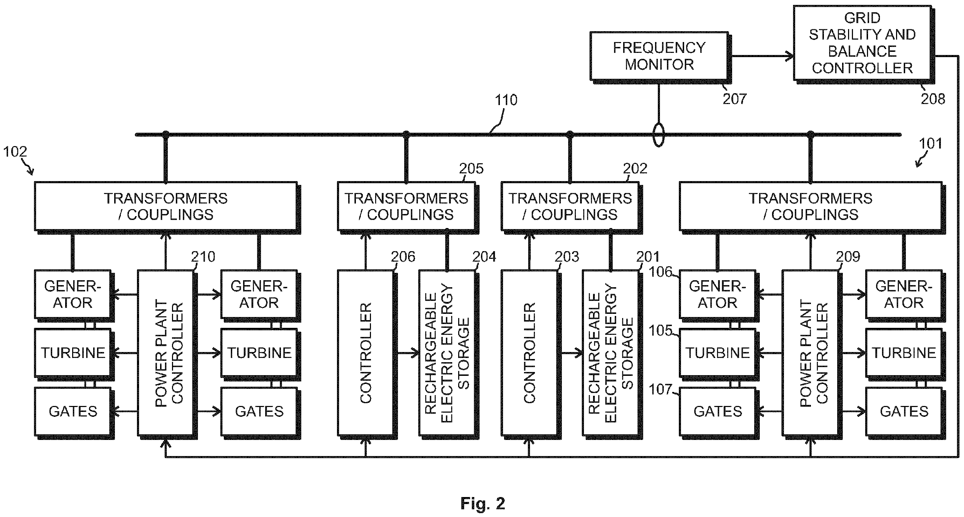

Fig. 2 illustrates an arrangement with which hydroelectric power can be used as a power reserve of an electricity grid. The arrangement of fig. 2 comprises a plurality of hydroelectric power generators coupled to supply electric energy to an electricity grid 110. In this example the hydroelectric power generators are located in two separate hydroelectric power plants 101 and 102. An example of a hydroelectric power generator is the hydroelectric power generator of the first hydroelectric power plant 101, comprising a turbine 105, an associated generator 106, and gates 107 for affecting the flow of water through the turbine 105.

As a difference to the system of fig. 1 the arrangement of fig. 2 comprises one or more rechargeable electric energy storages, of which rechargeable electric energy storages 201 and 204 are shown as examples. A rechargeable electric energy storage such as those shown as 201 and 204 may comprise an electrochemical rechargeable battery, a capacitor, a supercapacitor, or some combination of one or more such individual entities.

The arrangement comprises also a controllable coupling 202 or 205 between the respective rechargeable electric energy storage 201 or 204 and the electricity grid 110. The controllable coupling 202 or 205 may be a bidirectional coupling, so that it can be made to allow electric energy to flow in both directions between the respective rechargeable electric energy storage 201 or 204 and the electricity grid 110. The controllable coupling 202 or 205 may comprise controllable switching components, as well as components needed to match the respective rechargeable electric energy storage 201 or 204 and the electricity grid 110 electrically to each other. For example, if the rechargeable electric energy storage 201 or 204 is or comprises a DC device, the respective controllable coupling 202 or 205 may comprise an inverter for converting DC power taken from the rechargeable electric energy storage 201 or 204 to AC power before feeding it into the electricity grid 110. The controllable coupling 202 or 205 may comprise transformers and/or other kind of voltage level converters. The controllable coupling 202 or 205 may comprise a rectifier for converting AC power taken from the electricity grid 110 to DC power before feeding it into the respective rechargeable electric energy storage 201 or 204.

Controllers 203 and 206 are shown separately in fig. 2, configured to control the respective rechargeable electric energy storage 201 or 204 as well as the controllable coupling 202 or 205 between it and the electricity grid 110. The controller functionality may also be partly or wholly integral with the respective rechargeable electric energy storage 201 or 204 and/or the controllable coupling 202 or 205.

The arrangement of fig. 2 comprises a frequency monitor 207 that is configured to monitor an AC frequency of the electricity grid 110. A control system 208 is coupled to receive detection information from the frequency monitor 207 and configured to control at least some of the rechargeable electric energy storages 201 and 204 and the hydroelectric power plants 101 and 102, through the respective controllers 203, 206, 209, and 210.

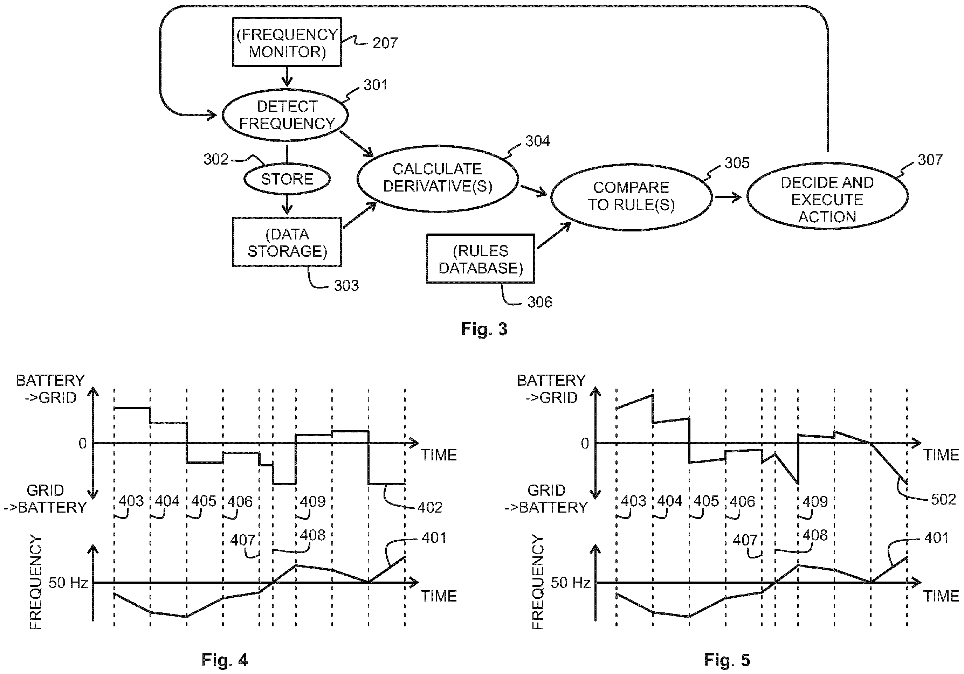

Fig. 3 illustrates a method according to an embodiment, shown here in the form of a flow diagram. It is also possible to read fig. 3 as an illustration of an arrangement, in terms of how certain parts of the arrangement are made to operate.

Reference designators 301, 302, 303, and 304 in fig. 3 illustrate the monitoring of an AC frequency of an electricity grid to detect a rate of change of the AC frequency. Here it is assumed that at least one hydroelectric power generator is run at a respective output power level, for the purpose of supplying electric energy to said electricity grid. It is important to note that not (only) the actual frequency value of the grid is monitored, but also its rate of change. In fig. 3 this is schematically illustrated so that reference designator 301 illustrates detecting a momentary frequency of the grid, reference designator 302 illustrates storing the detected frequency value in a data storage 303, and reference designator 304 illustrates using at least some of the most recently detected momentary frequency values to calculate one or more time derivatives.

Reference designator 305 in fig. 3 illustrates comparing one or more of the calculated one or more time derivatives to one or more rules read from a rules database 306. The purpose of the comparison(s) is to find out, whether the detected rate of change, i.e. the value of one or more of the calculated one or more time derivatives, is such that it should be reacted upon and if so, how. A decision about such reacting and the execution of the decided action are represented with reference designator 307 in fig. 3.

One advantageous way of responding to the detection of a rate of change of the AC frequency is to make electric energy flow between a rechargeable electric energy storage and the electricity grid. In such a case, the rate at which electric energy is made to flow between the rechargeable electric energy storage and the electricity grid should be decided so that the electric energy flowing between the rechargeable electric energy storage and the electricity grid counteracts the detected change of the AC frequency. In particular, it should counteract the detected change of the AC frequency in the same direction as the mechanical inertia of the hydroelectric power generator. The absolute magnitude or efficiency at which the electric energy flowing between the rechargeable electric energy storage and the electricity grid counteracts the detected change of the AC frequency should be proportional to an absolute value of the detected rate of change of the AC frequency.

For conciseness of expression, the rechargeable electric energy storage is called a battery bank in the following. This choice of wording is not limiting, as other kinds of rechargeable electric energy storages, such as those mentioned earlier in this text for example, are conceptually covered as well.

The principle explained above with reference to fig. 3 may be characterized so that the forced flow of electric energy between the battery bank and the electricity grid augments and supports the mechanical inertia of the hydroelectric power generator in increasing the stability of the electricity grid. If the AC frequency of the grid is found to decrease, electric energy is made to flow from the battery bank into the electricity grid. Correspondingly, if the AC frequency of the grid is found to increase, electric energy is made to flow from the electricity grid into the battery bank.

There is an important difference between this principle and the mere use of a battery bank to counteract frequency deviations. In the latter, the straightforward aim is to just drive the AC frequency towards its nominal value, like 50 Hz for example. So, in the mere use of a battery bank to counteract frequency deviations, if a detected momentary frequency is below the nominal value, indicating excessive demand of electric energy, one makes electric energy flow from the battery bank to the grid, thus increasing supply. Or if a detected momentary frequency is above the nominal value, indicating excessive supply of electric energy, one makes electric energy flow from the grid to the battery bank, thus increasing demand.

As a comparison, in the principle shown in fig. 3 events of for example the following kind are possible and even likely to occur. Let us assume that the second latest detected AC frequency value was 49.92 Hz and the latest detected AC frequency value was 49.94 Hz. In other words, the detected AC frequency is below the nominal value 50 Hz. However, because the latest calculated time derivative of first order is positive, i.e. the detected AC frequency of the grid is increasing, as a response electric energy is made to flow from the grid to the battery bank. If said detected AC frequency values were the other way round, indicating an ongoing change from 49.94 Hz to 49.92 Hz, the latest calculated time derivative of first order would be negative. As a response, electric energy would be made to flow from the battery bank to the grid. In both cases all detected AC frequency values were below the nominal value 50 Hz, but the direction of the forced flow of electric energy between the grid and the battery bank was different depending on the sign of the latest calculated time derivative.

In fig. 4, the lower graph 401 illustrates a fictitious time series of detected AC frequency values of the electricity grid. For simplicity of illustration, it is assumed that the detected AC frequency values are such that the graph forms a simple polygonal chain consisting of straight segments between points that occur at constant intervals of time. Some of the detected AC frequency values are below the nominal frequency 50 Hz while others are above it.

The upper graph 402 illustrates the direction and magnitude of a forced flow of electric energy between a battery bank and the electricity grid. Values of the graph 402 above the zero line represent electric energy flowing from the battery bank to the grid, while values below the zero line represent electric energy flowing from the grid to the battery bank.

In conformity with the principle explained above with reference to fig. 3, whenever a segment in the frequency graph 401 goes generally downwards (i.e. has a negative time derivative of first order), the corresponding segment in the energy graph 402 is above the zero line. Correspondingly, for each segment in the frequency graph 401 that goes generally upwards (i.e. has a positive time derivative of first order), the corresponding segment in the energy graph 402 is below the zero line.

A further feature is related to the vertical distances between the segments of the energy graph 402 and the zero line. For each segment, said distance represents the absolute magnitude of the rate at which electric energy is made to flow between the battery bank and the grid. In general, said absolute magnitude is proportional to an absolute value of the detected rate of change of the AC frequency of the grid. In fig. 4 this means that the steeper a segment is in the frequency graph 401, the further away from the zero line is the corresponding segment in the energy graph 402. For example, between the first two vertical lines 403 and 404 the frequency graph 401 descends relatively steeply, and the corresponding segment in the energy graph 402 is relatively far away from the zero line. Between vertical lines 404 and 405 the frequency graph 401 descends less steeply, and the corresponding segment in the energy graph 402 is closer to the zero line.

A further, advantageous but not mandatory feature is seen in fig. 4 by comparing the graphs in the slots between vertical lines 403 and 404 on one hand and between 405 and 406 on the other hand. In the first-mentioned slot, the time derivative of the frequency graph 401 is negative, while in the other slot it is positive. Correspondingly, in the first-mentioned slot the energy graph 402 is above the zero line while in the other slot it is below the zero line. The absolute value of the time derivative of the frequency graph is about the same in both slots: in the first-mentioned slot the graph descends about as steeply as it ascends in the other slot. However, the vertical distance between the segment of the energy graph 402 and the zero line is larger in the first-mentioned slot than in the other slot.

In each case, a coefficient of proportionality could be used to describe the proportionality of the absolute magnitude of the flow rate of electric energy to the absolute value of the detected rate of change in the AC frequency of the grid. The difference between the slots between vertical lines 403 and 404 on one hand and between 405 and 406 on the other hand reflects the fact that, for at least one predetermined absolute value of the detected rate of change of the AC frequency, said coefficient of proportionality is made larger if the detected rate of change is away from the nominal value of the AC frequency than if the detected rate of change is towards the nominal value of the AC frequency.

Remembering that the "synthetic inertia" introduced by an energy flow to or from the battery bank basically opposes any change in the grid frequency, be it a change away from or towards the nominal frequency, the described difference in the coefficient of proportionality means that one opposes more strongly those changes that are directed away from the nominal frequency than those directed towards the nominal frequency. Another prominent example of this is seen in the slot between lines 407 and 409, where the detected frequency change in first towards the nominal frequency between lines 407 and 408 and then away from it between lines 408 and 409. The first-order time derivative of the frequency graph 401, i.e. the detected rate of change in AC frequency of the grid, remains at a constant positive value between lines 407 and 409, and correspondingly the energy graph 402 remains below the zero line. However, the coefficient or proportionality jumps to a larger value at line 408 when the detected change in frequency changes from being towards the nominal value to being away from it.

Fig. 5 reflects some further possible modifications of the basic principle. The frequency graph 401 is the same as in fig. 4. However, the segments of the energy graph 502 are not horizontal. This reflects the fact that, in addition to the rate of change of the AC frequency, the method comprises detecting an absolute deviation of the AC frequency from the nominal frequency value. The method comprises making electric energy flow between the battery bank and the electricity grid at an absolute magnitude proportional to said absolute deviation. For example, in the slot between lines 403 and 404, the absolute deviation increases towards the end of the slot and, correspondingly, electric energy is made to flow between the battery bank and the electricity grid at a rate that increases towards the end of the slot.

If the last-mentioned principle is applied, suitable relative weights for the dependence on detected rate of change and the dependence on detected absolute deviation can be found by experimenting.

Referring back to fig. 2, if there are multiple battery banks (or, more generally, multiple rechargeable energy storages 201 and 204) available, the method may comprise responding to a detected rate of frequency change by making a selection among the plurality of available rechargeable electric energy storages 201 and 204. As a result of such selection, electric energy is made to flow between the electricity grid 110 and a selected one or selected ones of said plurality of rechargeable electric energy storages 201, 204. At least one rechargeable energy storage may be selected to provide synthetic inertia by just opposing a detected frequency change, while at least one other rechargeable energy storage may be used to straightforwardly counteract detected deviations from the nominal frequency.

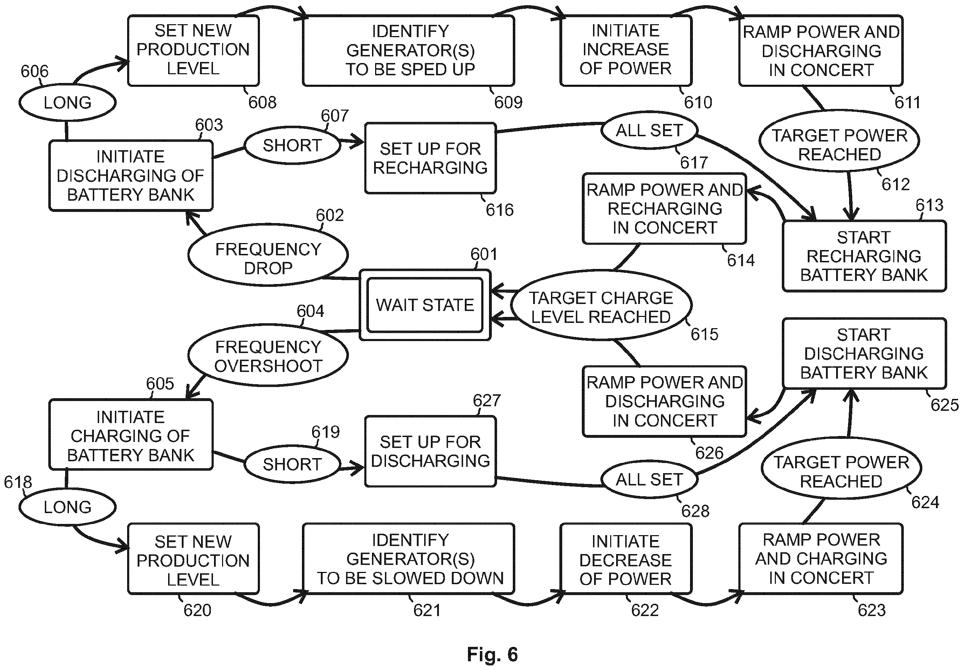

Fig. 6 illustrates an example of how, in addition to any of the stabilizing strategies explained above, one may control the production of electric energy at hydroelectric power plants and compensating action by one or more rechargeable electric energy storages. In the wait state 601 each of the plurality of hydroelectric power generators is run at its respective output power level to supply electric energy at a total output power to the electricity grid. The wait state 601 comprises also monitoring the AC frequency of the electricity grid to detect deviations from a default frequency range.

As a response to detecting a deviation from said default frequency range, electric energy is made to flow between a rechargeable electric energy storage and said electricity grid. In the following, all types of rechargeable electric energy storages are again referred to as battery banks for conciseness, without actually being limited thereto. As a first example we may assume that the deviation was a frequency drop 602, so a process of discharging electric energy from the battery bank to the electricity grid is initiated as illustrated by state 603. Had a frequency overshoot 604 been detected, the corresponding change of state would have led to state 605, in which a process was initiated to charge the battery bank with electric energy drawn from the electricity grid.

In fig. 6, it is assumed that after making electric energy flow between the battery bank and the grid, the control system will wait for a while to examine whether the deviation persists before making a decision to change a total output power level of the plurality of hydroelectric power generators. A "long" deviation 606 in fig. 6 refers to case in which the deviation was found to persist, a "short" deviation 607 in fig. 6 refers to a case in which the deviation was found not to persist. Following the condition "long" 606 in fig. 6 the control system proceeds to set a new total power output level at state 608 and to identify at state 609 that hydroelectric power generator (or those hydroelectric power generators) that will be used to generate the required additional electric power.

The control system then initiates a change in the total output power of said plurality of hydroelectric power generators from a first total output power level to a second total output power level. Initiating the increase in total output power corresponds to state 610 in fig. 6. Simultaneously the control system begins to reduce the power at which electric energy is fed from the battery bank to the electricity grid.

Changing the two powers in concert, as illustrated with state 611 in fig. 6, means that for a while, the sum of electric powers fed into the electricity grid from the plurality of hydroelectric power generators on one hand and the battery bank on the other hand remains constant. In other words, the power at which electric energy flows between the battery bank and the electricity grid is dynamically controlled to correspond to a remaining difference between a momentary output power of the plurality of hydroelectric power generators and said second total output power level.

At a certain moment the target total output power level of the plurality of hydroelectric power generators is reached (see condition 612 in fig. 6) . The battery bank needs to be restored into its default state of charge, for which reason the total output power of the plurality of hydroelectric power generators can be made to continue changing in the same direction until a second, later moment of time. Recharging the battery is illustrated with state 613 in fig. 6.

At a yet further moment the changes in total output power of the plurality of hydroelectric power generators are stopped, so that the total output power is slightly above the eventually desired "second" output power level. Said total output power of said plurality of hydroelectric power generators is eventually returned to said second total output power level at a third, even later moment of time. Meanwhile, the battery bank is recharged because it had most recently been discharging. In other words, the excess electric energy produced by the plurality of hydroelectric power generators is conducted into the battery bank according to some selected battery recharging strategy. If the originally detected deviation had been a frequency overshoot, restoring the battery bank into its default state of charge would involve discharging it, because in that case it had been charging before said first moment of time.

The power at which the battery bank is recharged may be significantly lower than the power at which it was discharged, but this is only an illustrative example, and the selected recharging power level can be selected on the basis of appropriate knowledge of the electric characteristics of the battery bank (or, more generally: the electric energy storage). In order to maintain the net power available for others in the electricity grid constant, it is advisable to make reciprocal changes in the total output power of the plurality of hydroelectric power generators and the power at which electric energy flows between said electric energy storage and said electricity grid until a target charge level of said electric energy storage has been reached. In fig. 6, such reciprocal changes constitute a part of state 614. Reaching the default or target charge level of the battery bank as in condition 615 of fig. 6 causes a transition back to the wait state 601.

Another possible case was one in which the deviation is found not to persist. In fig. 6 this is the condition "short" 607. At some later moment, not much later, the control system finds that the AC frequency of the network is safely within the default frequency range again, so no changes in the total output power of the plurality of hydroelectric power generations are needed, and the battery bank can be decoupled from the electricity grid. However, the electric energy that was meanwhile taken from the battery bank should be replenished. Therefore the control system makes plans for an energy storage restoration process, as illustrated by state 616 in fig. 6. Since there are now no particular needs to react fast, the planned energy storage restoration process can begin at any suitable moment in the near future, and it may follow a profile that comprises only very smooth changes in power, if necessary.

When everything is ready for executing the planned energy storage restoration process, as illustrated by condition 617 in fig. 6, a transition to state 613 occurs. The total output power of the plurality of hydroelectric power generators is temporarily increased. At some later moment the battery bank has been restored to its default state of charge. The energy storage restoration process may comprise reciprocal changes in said total output power and the power at which electric energy flows between said electric energy storage and said electricity grid until said later moment.

The lower part of the state diagram in fig. 6 is essentially a mirror image of the upper part, with all frequency- and power-related terms inverted. Thus, for example, while state 609 comprised identifying that hydroelectric power generator or those hydroelectric power generators that were to be sped up, the corresponding mirror image state 617 comprises identifying that hydroelectric power generator or those hydroelectric power generators that are to be slowed down.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for increasing stability in an electricity grid (110), the method comprising:
- running at least one hydroelectric power generator (106) at a respective output power level, to supply electric energy to said electricity grid (110),
- monitoring an AC frequency of said electricity grid (110) to detect a rate of change of said AC frequency, and
- as a response to detecting a rate of change of said AC frequency, making electric energy flow between a rechargeable electric energy storage (201) and said electricity grid (110);
**wherein** a rate at which said electric energy is made to flow between said rechargeable electric energy storage (201) and said electricity grid (110) is decided so that the electric energy flowing between said rechargeable electric energy storage (201) and said electricity grid (110) counteracts the detected change of said AC frequency
- in a same direction as a mechanical inertia of said hydroelectric power generator (106) and
- at an absolute magnitude proportional to an absolute value of said detected rate of change of said AC frequency,
**characterized in that** the method comprises at least one of:
- for at least one predetermined absolute value of said detected rate of change of said AC frequency, making a coefficient of said proportionality larger if said detected rate of change is away from a nominal value of said AC frequency than if said detected rate of change is towards said nominal value of said AC frequency,
- in addition to said rate of change of said AC frequency, detecting an absolute deviation of said AC frequency from a nominal frequency value, and making electric energy flow between said rechargeable electric energy storage (201) and said electricity grid (110) at an absolute magnitude proportional to said absolute deviation.

2. A method according to claim 1, comprising:
- as a response to said detecting of a rate of change of said AC frequency, making a selection among a plurality of available rechargeable electric energy storages (201, 204), so that as a result of said selection, electric energy is made to flow between said electricity grid (110) and a selected one or selected ones of said plurality of rechargeable electric energy storages (201, 204).

3. A method according to any of the preceding claims, comprising:
- running a plurality of hydroelectric power generators (106), each at a respective output power level,
- monitoring (207) said AC frequency of said electricity grid (110) to detect deviations from a nominal frequency range,
- as a response to detecting a deviation (502, 504) from said nominal frequency range, making electric energy flow (503, 505) between said electricity grid (110) and said rechargeable electric energy storage (201) or at least one of said rechargeable electric energy storages (201, 204), and initiating a change (510, 522) in at least one of said respective output power levels of said plurality of hydroelectric power generators (106) from a first output power level to a second output power level to make a total output power of said plurality of hydroelectric power generators (106) change from a first total output power level to a second total output power level, and
- for the duration of time it takes for the total output power levels to reach (512, 524) said second total output power level, supplying (511, 523) the electric energy produced by said plurality of hydroelectric power generators (106) to said electricity grid (110) and continuing (511, 523) to make electric energy flow between said electricity grid (110) and said rechargeable electric energy storage (201) or at least one of said rechargeable electric energy storages (201, 204).

4. An arrangement for using hydroelectric power as a power reserve of an electricity grid (110), comprising:
- a rechargeable electric energy storage (201),
- a controllable coupling (202) between said rechargeable electric energy storage (201) and said electricity grid (110),
- at least one hydroelectric power generator (106) coupled to supply electric energy to said electricity grid (110),
- a frequency monitor (207) configured to monitor an AC frequency of said electricity grid (110), and
- a control system (208) coupled to receive detection information from said frequency monitor (207) and configured to control said controllable coupling (202) and an output power level of said at least one hydroelectric power generator (106);
wherein said control system (208) is configured to respond to detection information indicative of a rate of change of said AC frequency by:
- deciding a rate at which electric energy is made to flow between said rechargeable electric energy storage (201) and said electricity grid (110) so that such electric energy made to flow between said rechargeable electric energy storage (201) and said electricity grid (110) is to counteract the detected change of said AC frequency
-- in a same direction as a mechanical inertia of said hydroelectric power generator (106) and
-- at an absolute magnitude proportional to an absolute value of said detected rate of change of said AC frequency, and
- making electric energy flow between said rechargeable electric energy storage (201) and said electricity grid (110) at the decided rate,
**characterized in that** the control system is configured to do at least one of
- for at least one predetermined absolute value of said detected rate of change of said AC frequency, making a coefficient of said proportionality larger if said detected rate of change is away from a nominal value of said AC frequency than if said detected rate of change is towards said nominal value of said AC frequency,
- detecting an absolute deviation of said AC frequency from a nominal frequency value, and makin electric energy flow between said rechargeable electric energy storage (201) and said electricity grid (110) at an absolute magnitude proportional to said absolute deviation.

5. An arrangement according to claim 4, wherein:
- the arrangement comprises a plurality of rechargeable electric energy storages (201, 204), and
- the control system (208) is configured to, as a response to said detecting of a rate of change of said AC frequency, make a selection among said plurality of rechargeable electric energy storages (201, 204), so that as a result of said selection, electric energy is made to flow between said electricity grid (110) and a selected one or selected ones of said plurality of rechargeable electric energy storages (201, 204).

6. An arrangement according to any of claims 4 or 5, wherein said control system (208) is configured to respond to detection information indicative of a deviation (502, 504) of said AC frequency from a nominal frequency range by:
- making electric energy flow (503, 505) between said electricity grid (110) and said rechargeable electric energy storage (201) or at least one of said rechargeable electric energy storages (201, 204),
- initiating a change (510, 522) in said output power of at least one of said plurality of hydroelectric power generators (106) from a first output power level to a second output power level to make a total output power of said plurality of hydroelectric power generators (106) change from a first total output power level to a second total output power level, and
- continuing (511, 523) to make electric energy flow between said electricity grid (110) and said rechargeable electric energy storage (201) or at least one of said rechargeable electric energy storages (201, 204) for the duration of time it takes for the total output power to reach (512, 524) said second total output power level.
